# FASCICULE DE BREVET EUROPEEN

(11) **EP 3 548 431 B1**
(45) Date de publication et mention de la délivrance du brevet: **26.08.2020**
(21) Numéro de dépôt: 17798254.3
(22) Date de dépôt: 21.11.2017
(51) Int. Cl.: C01B 32/194

(54) **PROCEDE D'EXFOLIATION DE GRAPHENE**
VERFAHREN ZUR EXFOLIERUNG VON GRAPHEN
METHOD FOR THE EXFOLIATION OF GRAPHENE

(30) Priorité: 30.11.2016 FR 1661699
(43) Date de publication de la demande: 09.10.2019
(73) Titulaire: Commissariat à l'Énergie Atomique et aux Énergies Alternatives, 75015 Paris (FR); Centre National de la Recherche Scientifique, 75016 Paris (FR); Université Grenoble Alpes, 38400 Saint-Martin-d'Hères (FR)
(72) Inventeur: CUNGE, Gilles, 38600 Fontaine (FR); DAVYDOVA, Alexandra, 38000 Grenoble (FR); DESPIAU-PUJO, Emilie, 38000 Grenoble (FR); FERRAH, Djawhar, 38000 Grenoble (FR); RENAULT, Olivier, 38240 Meylan (FR)
(74) Mandataire: Esselin, Sophie
(86) Numéro de dépôt international: PCT/EP2017/079854
(87) Numéro de publication internationale: WO 2018/099759

(56) Documents cités:
- WEI LUO ET AL: "Paper;High-precision thickness regulation of graphene layers with low energy helium plasma implantation;High-precision thickness regulation of graphene layers with low energy helium plasma implantation", NANOTECHNOLOGY, IOP, BRISTOL, GB, vol. 23, no. 37, 24 août 2012 (2012-08-24) , page 375303, XP020228686, ISSN: 0957-4484, DOI: 10.1088/0957-4484/23/37/375303 cité dans la demande
- U. BANGERT ET AL: "Ion Implantation of Graphene-Toward IC Compatible Technologies", NANO LETTERS, vol. 13, no. 10, 9 octobre 2013 (2013-10-09), pages 4902-4907, XP055353925, US ISSN: 1530-6984, DOI: 10.1021/nl402812y
- HAZRA K S ET AL: "Thinning of multilayer graphene to monolayer graphene in a plasma environment;Thinning of multilayer graphene to monolayer graphene in a plasma environment", NANOTECHNOLOGY, IOP, BRISTOL, GB, vol. 22, no. 2, 8 décembre 2010 (2010-12-08), page 25704, XP020202751, ISSN: 0957-4484, DOI: 10.1088/0957-4484/22/2/025704
- LIBO GAO ET AL: "Face-to-face transfer of wafer-scale graphene films", NATURE, vol. 505, no. 7482, 11 décembre 2013 (2013-12-11), pages 190-194, XP055297995, ISSN: 0028-0836, DOI: 10.1038/nature12763

## Description

Le domaine de l'invention est celui des procédés d'exfoliation de couche de graphène.

Le graphène est une monocouche atomique de carbone hybridé sp², et constitue un matériau prometteur, susceptible de révolutionner les nanotechnologies. Pour exploiter au mieux ce matériau, il est important de pouvoir le transférer depuis le substrat sur lequel on l'a fait croître (en général du cuivre polycristallin) vers d'autres types de substrats en général isolants. Ces substrats peuvent être rigides et peuvent typiquement être des oxydes dits « high-k ». De manière générale, les diélectriques « high-k » sont des matériaux présentant une constante diélectrique κ élevée (comparée à celle du dioxyde de silicium). L'utilisation de ce type de matériau constitue l'une des stratégies de développement permettant la miniaturisation des composés en microélectronique. Ces substrats isolants peuvent également être souples et être par exemple en polymère.

Cependant, les différentes démonstrations mettant à profit les propriétés physico-chimiques exceptionnelles du graphène ont été effectuées sur des échantillons modèles car le graphène transféré est toujours contaminé ou endommagé lors du transfert et perd certaines de ses caractéristiques principales.

La croissance par dépôt de vapeur chimique « CVD » et la croissance par épitaxie sur SiC permettent de fabriquer du graphène de très bonne qualité cristalline sur de grandes surfaces. Néanmoins, après sa croissance, le graphène dit « CVD » doit être transféré vers d'autres substrats pour fabriquer des dispositifs. Ce procédé de transfert implique le dépôt, sur le graphène, d'une couche polymère (servant de support rigide de transfert), suivi d'une étape visant à désolidariser le graphène de son substrat de croissance : cette dernière étape est réalisée soit par traitement électrochimique, soit par la dissolution du substrat métallique en bain acide.

Dans les deux cas, l'ensemble : graphène plus polymère flotte dans le bain chimique et peut alors être « repêché » et reporté sur le nouveau substrat. Cette procédure complexe est nécessaire car les forces d'adhésion du graphène sur le cuivre sont plus fortes que celles entre le graphène et les autres substrats sur lequel il peut être reporté : un report direct par « pressage » du graphène (sur cuivre) sur le nouveau substrat est donc impossible.

Ces technologies de transfert du graphène dit « CVD » vers des substrats d'accueil posent de nombreux problèmes : résidus de cuivre en face arrière du graphène, déchirure du graphène et présence de résidus de polymères résistant aux solvants. Ces problèmes altèrent considérablement les propriétés électroniques du graphène, comme décrit dans l'article : G. Cunge, D. Ferrah, C. Petit-Etienne, A. Davydova, H. Okuno, D. Kalita, V. Bouchiat and O. Renault, J. Appl. Phys. 118 (12) (2015).

Il est plus précisément connu les techniques suivantes pour transférer le graphène dit « CVD » depuis le Cuivre vers d'autres substrats. Elles nécessitent toutes l'utilisation de support rigide en polymère et présentent des risques élevés d'endommagement du graphène :
- la dissolution du cuivre dans des bains FeCl₃ ou équivalent décrit dans l'article : X. L. Liang, B. A. Sperling, I. Calizo, G. J. Cheng, C. A. Hacker, Q. Zhang, Y. Obeng, K. Yan, H. L. Peng, Q. L. Li, X. X. Zhu, H. Yuan, A. R. H. Walker, Z. F. Liu, L. M. Peng and C. A. Richter, ACS Nano 5 (11), 9144-9153 (2011), ce traitement agressif élimine le cuivre. Cependant, s'il est trop agressif, le graphène est endommagé alors que dans le cas contraire des résidus de cuivre sous forme de particules restent collés au graphène. De plus le polymère (ou le scotch « thermal release tape ») utilisé pour rigidifier le graphène ne peut pas être éliminé parfaitement une fois le report effectué ;
- l'électrochimie décrite notamment dans l'article : F. Pizzocchero, B. S. Lessen, P. R. Whelan, N. Kostesha, S. Lee, J. D. Buron, I. Petrushina, M. B. Larsen, P. Greenwood, W. J. Cha, K. Teo, P. U. Jepsen, J. Hone, P. Boggild and T. J. Booth, Carbon 85, 397-405 (2015). Le traitement électrochimique utilise aussi un polymère épais comme support rigide de transfert. Le traitement électrochimique permet de générer des bulles de gaz H₂ entre le cuivre et le graphène. Sous l'effet de la pression de H₂ le graphène se décolle du cuivre et peut ensuite être transféré vers son substrat d'accueil. L'utilisation d'un polymère est indispensable ;
- la technologie « Smart cut » décrite notamment dans l'article : B. Aspar, M. Bruel, H. Moriceau and al., Microelectronic Engineering, 36 ((1-4)), 233-240 (1997), consiste à implanter des ions H⁺ ou He⁺ profondément dans un substrat de Si. A partir d'une certaine dose, l'accumulation de gaz (H₂, He) dans le volume ou « bulk » des matériaux à la profondeur d'implantation provoque sa fracture : le substrat est ainsi clivé en deux substrats de plus fines épaisseurs.

Il est par ailleurs connu et notamment décrit dans l'article : W. Luo, J. Xie, C. B. Li, Y. Zhang and Y. Xia, Nanotechnology 23 (37) (2012) que des plasmas d'hélium peuvent mener à la gravure contrôlée du graphène couche à couche, néanmoins dans des gammes d'énergie très élevée ne permettant pas d'éviter d'endommager le graphène.

Dans ce contexte, le Demandeur a recherché une méthode permettant d'affaiblir les forces de cohésion entre le graphène et son substrat natif, de manière à pouvoir en réaliser l'exfoliation, sans risque d'endommagement et permettant ainsi un report par transfert direct du substrat de croissance vers d'autres substrats sans avoir recours à l'utilisation de polymères ni à aucun bain chimique.

Le Demandeur a observé que certaines conditions d'implantation d'ion hydrogénés ou d'hélium à travers le graphène menaient à la formation de gaz entre le graphène et le substrat. Au-delà d'une certaine dose d'ions la pression de gaz devient supérieure aux forces de Van der Wall qui lient le graphène au substrat et il se produit un retrait couramment désigné « *lift off »* de toute la couche de graphène en un morceau (de la même manière que dans les procédés électrochimiques où le décollage est assuré par la formation de gaz à l'interface).

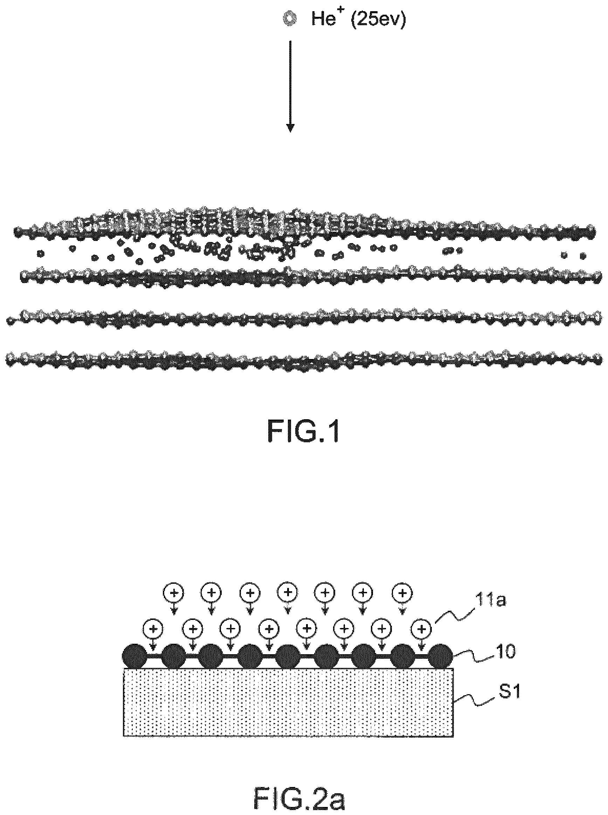

Ce phénomène est bien prédit par des simulations atomistiques de type dynamique moléculaire « MD » qui consistent à simuler l'impact d'ions Hx+ ou He+ d'énergie bien définie sur une cellule constituée d'un groupe d'atomes (substrat + graphène). A chaque impact, la « MD » suit le mouvement de chaque atome de la cellule en résolvant les équations de Newton (avec des potentiels semi-empiriques). La figure 1 montre par exemple le résultat d'une simulation d'implantation d'He à 25 eV sur un échantillon de graphène multicouche : du gaz He est bien piégé entre les deux premiers feuillets et le graphène n'est pas endommagé. Ce phénomène peut alors avantageusement être utilisé pour exfolier notamment le graphène « CVD » des feuillets de cuivre sur lesquels il a crû (ou encore le graphène sur SiC) ou encore pour graver couche à couche un graphène multicouche.

Plus précisément la présente invention a pour objet un procédé d'exfoliation de graphène, comprenant une étape d'irradiation d'un premier substrat comportant en surface du graphène, par un plasma d'hydrogène ou d'hélium comportant des ions d'énergie comprise entre 10 et 60 eV.

Préférentiellement, le plasma d'hydrogène ou d'hélium comporte des ions d'énergie comprise entre 15 et 30 eV.

Selon des variantes de l'invention, le premier substrat est conducteur ou semi-conducteur.

Selon des variantes de l'invention, le substrat est du cuivre ou du nickel ou du platine.

Selon des variantes de l'invention, le premier substrat est du carbure de silicium.

Selon des variantes de l'invention, l'étape d'irradiation est réalisée avec un réacteur plasma à couplage inductif (ICP).

Selon des variantes de l'invention, l'étape d'irradiation utilise un débit de gaz d'hélium ou d'hydrogène compris entre 10 et 1000 sccm (l'unité sscm correspondant à un centimètre cube par minute dans les conditions suivantes : une température = 0°C soit 32°F et une pression = 101.325 kPa une pression comprise entre 1 mtorr et 500 mtorr (1 torr étant équivalent à environ 0,133 322 kPa ou 1,33322 millibar) et une puissance comprise entre 50 et 2000 W.

Selon des variantes de l'invention, le premier substrat comportant du graphène multicouche, l'étape d'irradiation par un plasma d'hydrogène ou d'hélium comportant des ions d'énergie comprise entre 10 et 60 eV enlève au moins la couche supérieure du graphène multicouche, dans le cas de gravure couche à couche d'un échantillon multicouche.

Selon des variantes de l'invention, l'irradiation est réalisée au travers d'un masque configuré pour créer des motifs de graphène.

L'invention a aussi pour objet un procédé de fabrication de graphène à la surface d'un second substrat comportant le procédé d'exfoliation selon l'invention et comportant :
- une étape de report sur un second substrat depuis le premier substrat comportant en surface du graphène, ladite étape de report étant postérieure à ladite étape d'irradiation de manière à former un ensemble comprenant du graphène situé entre ledit premier substrat et ledit second substrat ;
- le retrait dudit premier substrat dudit ensemble.

Selon des variantes de l'invention, le procédé de fabrication de graphène à la surface d'un second substrat comprend en outre une opération de pressage dudit l'ensemble.

Selon des variantes de l'invention, le procédé de fabrication de graphène à la surface d'un second substrat comprend également une opération de chauffage.

Selon des variantes de l'invention, le second substrat est un substrat isolant. Il peut être rigide, pouvant être un oxyde « high-k ». Il peut être également souple, pouvant être en polymère.

L'invention sera mieux comprise et d'autres avantages apparaîtront à la lecture de la description qui va suivre donnée à titre non limitatif et grâce aux figures annexées parmi lesquelles :
- la figure 1 illustre le résultat d'une simulation d'implantation d'He à 25 eV sur un échantillon de graphène multicouche ;
- les figures 2a à 2d schématisent les étapes d'un procédé de fabrication de graphène à la surface d'un second substrat et comprenant le procédé d'exfoliation de la présente invention .

De manière connue, le graphène peut être obtenu par technique CVD sur un premier substrat en métal, il peut s'agir classiquement de cuivre ou d'autres métaux de transitions tels que transition Ni ou Pt.

Il est également possible de réaliser la croissance de graphène depuis un substrat semi-conducteur par exemple en SiC par épitaxie.

Selon la présente invention, le procédé d'exfoliation comporte une étape permettant de fragiliser les liaisons entre du graphène et ce premier substrat natif pour récupérer le graphène destiné à être utilisé sur un autre substrat dit second substrat.

Pour cela, le procédé de l'invention comporte l'irradiation dudit premier substrat comportant du graphène, par un plasma d'hélium ou d'hydrogène pouvant avantageusement être généré dans un réacteur haute-densité, pouvant être un réacteur à couplage inductif (de type ICP par exemple).

La figure 2a schématise ainsi une première étape d'un procédé de l'invention, mettant en évidence, l'irradiation par un flux d'ions positifs 11a, d'un premier substrat S₁ comportant du graphène 10.

Dans ce type de réacteur, un champ électrique RF est induit dans le plasma par une antenne externe. Il permet d'obtenir des fortes densités à basse pression. En fonction de la forme de l'antenne et de sa position, les réacteurs ICP se déclinent en différents types (TPC, DPS...). Pour les plus classiques, l'antenne en forme de spirale ou circulaire est soit enroulée autour d'un tube isolant soit posée à plat sur le toit en matériau diélectrique du réacteur : la source. C'est là qu'est créé le plasma par l'action du champ magnétique RF. Le substrat peut être placé dans une chambre séparée située en dessous de la source à quelques dizaines de centimètres afin d'augmenter l'uniformité du plasma. L'énergie des ions peut être facilement contrôlée en polarisant le substrat par une alimentation RF ou DC opéré en mode continu ou pulsé et indépendante de celle de la source.

Le substrat de base supportant du graphène et dénommé premier substrat peut être conducteur et notamment par exemple en cuivre de manière non limitative.

De manière générale, lorsque un substrat de graphène sur un substrat par exemple en cuivre est exposé au plasma il est bombardé par des ions He⁺ ou Hₓ⁺ (x=1-3) dont l'énergie peut être contrôlée dans la gamme 5 eV - 2000 eV.

Les ions de basse énergie (inférieure à 5 eV) rebondissent sur le graphène. Ceux de plus forte énergie (supérieure à 60 eV) endommagent à la fois le graphène (pulvérisation d'atomes de carbone menant à la formation de lacunes) et/ou le traversent pour s'implanter plus ou moins profondément dans le substrat de cuivre.

Il existe cependant une gamme d'énergie intermédiaire (10-60 eV) dans laquelle les ions Hₓ⁺ ou He⁺ peuvent passer à travers le graphène sans l'endommager pour se retrouver ensuite piégés entre le graphène et le premier substrat (leur énergie initiale leur permet de passer au centre des hexagones de graphène, mais une fois le graphène traversé, leur énergie n'est plus suffisante pour ressortir et ils sont piégés).

Il se forme ainsi du gaz H₂ (par recombinaison des atomes H) ou du gaz He intercalé entre le premier substrat et le graphène : ce gaz exerce une pression qui tend à séparer le graphène dudit premier substrat et qui affaiblit donc la force de cohésion entre eux. Quand la dose d'ions augmente, la pression de gaz intercalé augmente aussi, menant d'abord à la formation de bulles, comme décrit dans : B. Eren, D. Hug, L. Marot, R. Pawlak, M. Kisiel, R. Steiner, D. M. Zumbuhl and E. Meyer, Beilstein Journal of Nanotechnology 3, 852-859 (2012), puis au retrait ou « *lift off »* de toute la couche de graphène (comparable au décollage par électrochimie).

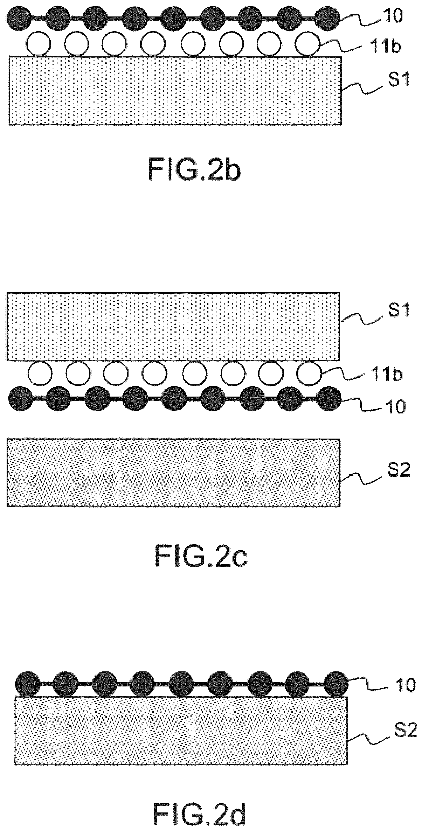

Par conséquent en contrôlant l'énergie et la dose des ions implantés il est possible d'affaiblir de manière contrôlée les forces de cohésion entre le graphène et le premier substrat. La figure 2b schématise, la formation d'une couche intermédiaire de gaz 11 b entre le graphène 10 et le premier substrat S₁.

Ceci ouvre la voie à un report direct sur un autre substrat dit second substrat, comme montré en figure 2c qui illustre le report du premier substrat S₁/ de la couche intermédiaire 11b/ du graphène 10, sur un second substrat S₂.

En effet, ce qui rend impossible, selon l'art antérieur, le transfert direct du graphène d'un premier substrat vers un second substrat est que le graphène adhère plus fortement au premier substrat plutôt qu'au second substrat.

Selon l'invention, il devient possible de retirer le premier substrat S₁ de l'ensemble préalablement formé : substrat S₁/ couche de gaz 11b/ graphène 10/ substrat S₂, pour obtenir l'ensemble substrat S₂/couche de graphène 10, comme illustré en figure 2d.

La présence de gaz intercalé permet d'inverser la situation de l'art antérieur. Cette opération de transfert peut avantageusement être assistée par une opération de pressage plus éventuellement par une opération de chauffage contrôlé des échantillons pendant le pressage. En effet, lorsque la température augmente la pression de gaz intercalé fait de même, poussant de ce fait le graphène vers son nouveau substrat d'accueil.

Le procédé d'exfoliation de l'invention comprenant une opération d'implantation de basse énergie à travers le graphène, cela nécessite d'utiliser des plasmas produisant des ions légers de petites dimensions (susceptibles de passer à travers les hexagones du graphène). C'est ainsi que les ions d'hélium ou d'hydrogène présentent les chimies de plasma les plus intéressantes.

L'Hélium présente avantageusement de plus une réactivité chimique quasiment nulle, permettant d'assurer une grande stabilité chimique vis-à-vis du graphène et des premiers substrats sur lesquels le graphène peut être élaboré.

L'opération d'implantation d'ions peut être réalisée notamment en utilisant un réacteur à couplage inductif « ICP ».

Dans un réacteur haute densité de type ICP, le flux de ces ions est parfaitement contrôlé par la puissance injectée et la gamme d'énergie recherchée (10-60 eV) est facilement accessible. Le temps de traitement peut être ajusté de manière à générer une pression de gaz intercalée suffisante pour « décoller » le graphène du premier substrat mais pas trop importante pour éviter le risque de décollage complet du graphène. Ce temps dépend du flux d'ion utilisé c'est-à-dire de la puissance ICP.

La même technique opératoire peut aussi être utilisée pour graver soit une ou plusieurs couches atomiques parmi un ensemble de N couches atomiques de graphène : dans ce cas il suffit de laisser le procédé durer jusqu'au retrait ou « lift off » de la couche supérieure de graphène qui sera ensuite détruite dans le plasma et pompé hors du réacteur.

### Exemple de procédé d'exfoliation selon l'invention :

Un premier substrat en cuivre sur lequel a été déposé par CVD du graphène est placé dans un réacteur utilisant un Plasma haute densité de H₂ ou préférentiellement d'He.

Les conditions opératoires sont les suivantes :
- un débit de gaz : 10 à 1000 sccm ;
- une pression : 1 mtorr à 500 mtorr ;
- une puissance ICP : 50 à 2000 W.
- une puissance d'autopolarisation de 0 à 200 W.

La puissance P de bias est utilisée pour accélérer les ions et permettre de contrôler leur énergie via la relation P=V^{∗}I ou V est la tension (i.e. l'énergie des ions) et I le courant (i.e. le flux d'ions). Si la Puissance ICP est grande (2000 W) le courant I est grand et il faut une puissance bias importante (200 W) pour atteindre 60 eV d'énergie. Par contre à faible ICP (50 W) I est faible et même une faible P peut suffire pour atteindre cette énergie limite.

Selon le procédé de l'invention, des ions He+ de 10 à 60 eV d'énergie sont ainsi produits permettant d'en irradier le premier substrat et le graphène préalablement formé à la surface dudit premier substrat.

La durée du traitement est ajustée de manière semi-empirique car elle dépend directement du flux ionique au niveau du substrat.

Le plasma est ainsi utilisé pour intercaler des ions He+ entre le graphène et le cuivre. Pour cela le substrat de graphène sur cuivre issu de la CVD est directement placé sur un porte-substrat polarisable du réacteur plasma.

Grace au plasma, il se forme alors une couche de gaz intercalée qui ne fuit pas car le graphène est parfaitement étanche à l'hélium et l'hydrogène.

Le substrat ainsi traité peut alors être sorti du réacteur à plasma et directement être mis en contact avec le nouveau substrat d'accueil du graphène (aucun polymère n'est nécessaire).

Selon la quantité d'ions He implantée, on peut effectuer un transfert soit direct (plus forte attraction vers le nouveau substrat que vers le cuivre) ou un transfert nécessitant un pressage et/ou un chauffage, ce dernier permettant de faire monter la pression du gaz He intercalé.

De manière générale, on peut également réaliser le procédé d"exfoliation de la présente invention, décrit dans le procédé précédent, avec une opération d'irradiation effectuée au travers d'un masque pour définir des motifs en graphène ou encore pour affiner un échantillon de graphène multicouche. Dans ce cas, la durée du plasma est simplement prolongée jusqu'au retrait ou « lift-off » de la (ou des) couche de graphène supérieure(s) qui sera(ont) ensuite détruite(s) dans le plasma.

## Revendications

1. Procédé d'exfoliation de graphène, comprenant une étape d'irradiation d'un premier substrat comportant en surface du graphène, par un plasma d'hydrogène ou d'hélium comportant des ions d'énergie comprise entre 10 et 60 eV.

2. Procédé selon la revendication 1, dans lequel le plasma d'hydrogène ou d'hélium comporte des ions d'énergie comprise entre 15 et 30 eV.

3. Procédé selon l'une des revendications 1 ou 2, dans lequel le premier substrat est conducteur ou semi-conducteur.

4. Procédé selon la revendication 3, dans lequel le substrat est du cuivre ou du nickel ou du platine.

5. Procédé selon la revendication 3, dans lequel le premier substrat est du carbure de silicium.

6. Procédé selon l'une des revendications précédentes dans lequel l'étape d'irradiation est réalisée avec un réacteur plasma à couplage inductif (ICP).

7. Procédé selon la revendication 6, utilisant un débit de gaz d'hélium ou d'hydrogène compris entre 10 et 1000 sccm, une pression comprise entre 1 mtorr et 500 mtorr et une puissance comprise entre 50 et 2000 W.

8. Procédé selon l'une des revendications 1 à 7, dans lequel le premier substrat comportant du graphène multicouche, l'étape d'irradiation par un plasma d'hydrogène ou d'hélium comportant des ions d'énergie comprise entre 10 et 60 eV enlève au moins la couche supérieure du graphène multicouche.

9. Procédé selon l'une des revendications 1 à 8, dans lequel l'irradiation est réalisée au travers d'un masque configuré pour créer des motifs de graphène.

10. Procédé selon l'une des revendications 3 à 9, dans lequel ledit substrat étant conducteur pouvant être du cuivre, du nickel ou du platine, ledit procédé comporte une étape de dépôt en phase vapeur d'au moins une couche de graphène à la surface dudit premier substrat.

11. Procédé selon l'une des revendications 3 à 9, dans lequel ledit premier substrat étant un semi-conducteur à base de carbone pouvant être du SiC, ledit procédé comporte une étape de dépôt par épitaxie d'au moins une couche de graphène à la surface dudit premier substrat.

12. Procédé de fabrication de graphène à la surface d'un second substrat comportant le procédé d'exfoliation selon l'une des revendications 1 à 11 et comportant :
- une étape de report sur un second substrat du premier substrat comportant en surface du graphène, ladite étape de report étant postérieure à ladite étape d'irradiation de manière à former un ensemble comprenant du graphène situé entre ledit premier substrat et ledit second substrat ;
- le retrait dudit premier substrat dudit ensemble.

13. Procédé selon la revendication 12, comprenant en outre une opération de pressage dudit l'ensemble.

14. Procédé de report selon l'une des revendications 12 ou 13 et comprenant une opération de chauffage.

## Patentansprüche

1. Verfahren zur Exfolierung von Graphen, beinhaltend einen Schritt des Bestrahlens eines ersten Substrates, welches Graphen an der Oberfläche beinhaltet, mit einem Wasserstoff- oder Heliumplasma, welches Ionen mit einer Energie zwischen 10 und 60 eV beinhaltet.

2. Verfahren nach Anspruch 1, wobei das Wasserstoff- oder Heliumplasma Ionen mit einer Energie zwischen 15 und 30 eV beinhaltet.

3. Verfahren nach einem der Ansprüche 1 oder 2, wobeidas erste Substrat ein Leiter oder Halbleiter ist.

4. Verfahren nach Anspruch 3, wobeidas Substrat Kupfer oder Nickel oder Platin ist.

5. Verfahren nach Anspruch 3, wobeidas erste Substrat Siliziumkarbid ist.

6. Verfahren nach einem der vorhergehenden Ansprüche, wobeider Schritt des Bestrahlens mit einem Plasmareaktor mit induktiver Kopplung (ICP) erfolgt.

7. Verfahren nach Anspruch 6, welches einen Durchfluss an Helium- oder Wasserstoffgas zwischen 10 und 1000 sccm, einen Druck zwischen 1 mtorr und 500 mtorr und eine Leistung zwischen 50 und 2000 W verwendet.

8. Verfahren nach einem der Ansprüche 1 bis 7, wobei, da das erste Substrat mehrschichtiges Graphen beinhaltet, der Schritt des Bestrahlens mit einem Wasserstoff- oder Heliumplasma, welches Ionen mit einer Energie zwischen 10 und 60 eV beinhaltet, mindestens die obere Schicht des mehrschichtigen Graphens entfernt.

9. Verfahren nach einem der Ansprüche 1 bis 8, wobeidie Bestrahlung durch eine Maske erfolgt, welche zum Schaffen von Graphenmustern konfiguriert ist.

10. Verfahren nach einem der Ansprüche 3 bis 9, wobei, da das Leitersubstrat leitfähig ist und Kupfer, Nickel oder Platin sein kann, das Verfahren einen Schritt des Ablagerns in der Gasphase von mindestens einer Graphenschicht an der Oberfläche des ersten Substrates beinhaltet.

11. Verfahren nach einem der Ansprüche 3 bis 9, wobei, da das erste Substrat ein Halbleiter auf Kohlenstoffbasis ist, welcher SiC sein kann, das Verfahren einen Schritt des epitaktischen Ablagerns von mindestens einer Graphenschicht an der Oberfläche des ersten Substrates beinhaltet.

12. Verfahren zur Herstellung von Graphen an der Oberfläche eines zweiten Substrates, beinhaltend das Verfahren zur Exfolierung nach einem der Ansprüche 1 bis 11 und Folgendes beinhaltend:
- einen Schritt des Übertragens des ersten, Graphen an seiner Oberfläche beinhaltenden Substrates auf ein zweites Substrat, wobei der Schritt des Übertragens nach dem Schritt des Bestrahlens in einer Weise erfolgt, dass eine Graphen beinhaltende Anordnung gebildet wird, welche sich zwischen dem ersten Substrat und dem zweiten Substrat befindet;
- Entfernen des ersten Substrates von der Anordnung.

13. Verfahren nach Anspruch 12, zudem beinhaltend einen Vorgang des Pressens der Anordnung.

14. Übertragungsverfahren nach einem der Ansprüche 12 oder 13 und beinhaltend einen Vorgang des Erhitzens.

## Claims

1. A process for exfoliating graphene, comprising a step of irradiating a first substrate comprising graphene on its surface, with a helium or hydrogen plasma containing ions of energy comprised between 10 and 60 eV.

2. The process according to claim 1, wherein the helium or hydrogen plasma contains ions of energy comprised between 15 and 30 eV.

3. The process according to one of claims 1 or 2, wherein the first substrate is conductive or semiconductive.

4. The process according to claim 3, wherein the substrate is copper or nickel or platinum.

5. The process according to claim 3, wherein the first substrate is silicon carbide.

6. The process according to one of the preceding claims, wherein the irradiating step is carried out with an inductively coupled plasma (ICP) reactor.

7. The process according to claim 6, using a hydrogen or helium gas flow rate comprised between 10 and 1000 sccm, a pressure comprised between 1 mtorr and 500 mtorr and a power comprised between 50 and 2000 W.

8. The process according to one of claims 1 to 7, wherein the first substrate comprising multilayer graphene, the step of irradiating with a helium or hydrogen plasma containing ions of energy comprised between 10 and 60 eV removes at least the top layer of the multilayer graphene.

9. The process according to one of claims 1 to 8, wherein the irradiation is carried out through a mask configured to create graphene patterns.

10. The process according to one of claims 3 to 9, wherein, said substrate being conductive and possibly being copper, nickel or platinum, said process comprises a step of vapor deposition of at least one graphene layer on the surface of said first substrate.

11. The process according to one of claims 3 to 9, wherein, said first substrate being a carbon-based semiconductor and possibly SiC, said process comprises a step of epitaxial deposition of at least one graphene layer on the surface of said first substrate.

12. A process for fabricating graphene on the surface of a second substrate, comprising the exfoliating process according to one of claims 1 to 11 and comprising:
- a step of transferring, to a second substrate, the first substrate comprising graphene on its surface, said transferring step being subsequent to said irradiating step so as to form an assembly comprising graphene located between said first substrate and said second substrate;
- removing said first substrate from said assembly.

13. The process according to claim 12, furthermore comprising an operation of pressing said assembly.

14. The transferring process according to one of claims 12 or 13 and comprising a heating operation.
